# EUROPEAN PATENT SPECIFICATION

(11) **EP 4 627 175 B1**
(45) Date of publication and mention of the grant of the patent: **11.11.2026**
(21) Application number: 23828116.6
(22) Date of filing: 01.12.2023
(51) Int. Cl.: E21B 17/01, E21B 17/10, E21B 19/00, E21B 41/00, E21B 43/013

(54) **INSTALLATION OF SUBSEA RISERS**
INSTALLATION VON UNTERWASSERSTEIGROHREN
INSTALLATION DE COLONNES MONTANTES SOUS-MARINES

(30) Priority: 01.12.2022 GB 202218097
(43) Date of publication of application: 08.10.2025
(73) Proprietor: Subsea 7 Norway AS, 4033 Stavanger (NO)
(72) Inventor: HOYVIK, Eskil, 4032 Stavanger (NO)
(74) Representative: Keltie LLP
(86) International application number: PCT/EP2023/083976
(87) International publication number: WO 2024/115758

(56) References cited:
- EP-B1- 2 329 106
- EP-B1- 3 164 566
- GB-A- 2 311 503
- NO-A1- 20 100 203
- US-A1- 2005 196 243

## Description

This invention relates to the installation and anchoring of dynamic flexible subsea risers as used in the subsea oil and gas industry and in the offshore renewable energy industry. The invention relates particularly to installing risers that have an intermediate reverse-curvature profile defining a hogbend, such as S-configuration or wave-configuration risers.

In this specification, 'riser' is intended to encompass various flexible elongate elements or products that extend from seabed to surface, including not just conduits for conveying fluids but also cables or umbilicals for conveying power and/or data. Power and data cables may also extend along a fluid-carrying riser conduit to power, control and monitor subsea installations.

A fluid-carrying subsea riser connects a pipeline on the seabed to the surface for transporting a fluid between those locations. In particular, production fluids containing oil and/or gas flow up the riser to a surface installation such as a platform or a floating production, storage and offloading (FPSO) vessel. Reciprocally, fluids such as water or chemicals may flow down the riser in one or more parallel pipes to support subsea oil and gas production.

Risers in the form of cables or umbilicals are used in the subsea oil and gas industry and in the offshore renewable energy industry for connecting marine installations and for exporting power.

Risers typically comprise a bottom section that runs generally horizontally parallel to the seabed and an upright ascending section that extends from the bottom section toward the surface. A sharply-curved bottom bend or sag bend section redirects the riser between the horizontal bottom section and the upright ascending section. The sag bend section extends upwardly along the riser from a touchdown point, at which the riser starts to bend away from contact with the seabed. It is in the sag bend section that the riser is most vulnerable to damage due to over-bending and fatigue as the riser flexes during installation and in use.

Several riser architectures or configurations are known in the art and described in standards adopted by the subsea oil and gas industry, for example in Det Norske Veritas' Offshore Standard DNV-OS-F201 entitled *Dynamic Risers.* The selection of a riser configuration involves a trade-off between various factors, notably: catenary weight; sea dynamics, including currents; fatigue; materials; water depth; installation method; flowrate; and cost.

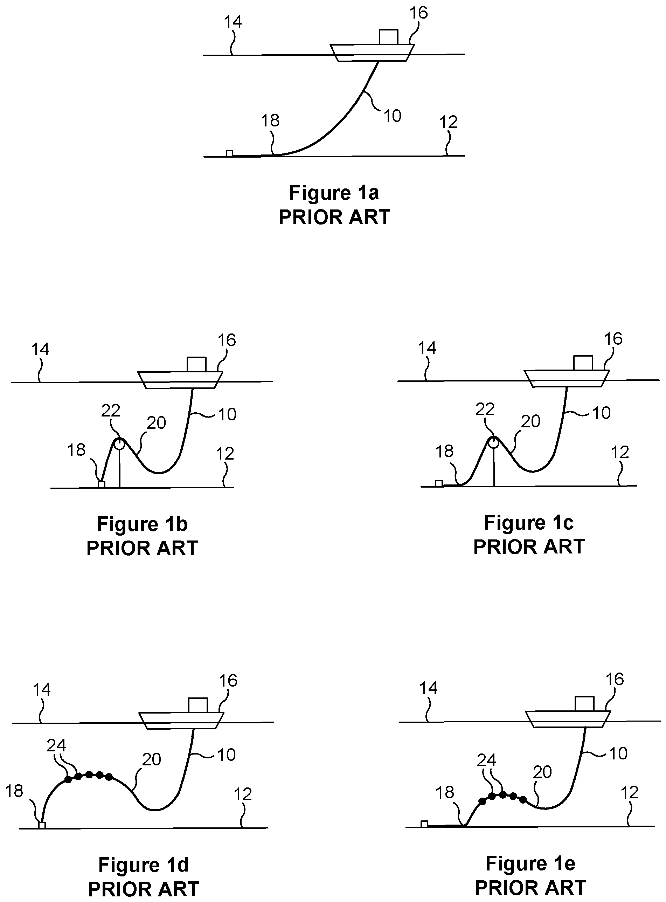

Figures 1a to 1e depict various known riser configurations. In each example, a riser 10 is shown extending from the seabed 12 to the surface 14, where the riser terminates at a surface installation that is exemplified here by an FPSO vessel 16.

Figure 1a shows the riser 10 in the form of a free-hanging catenary, which is the simplest, least expensive and easiest riser configuration to install. However, in deep water, the top tension is high due to the length and hence the weight of the riser 10 that is suspended between the vessel 16 and the seabed 12. Also, a free-hanging catenary is susceptible to damage due to motion of the vessel 16 driven by sea dynamics. The risk of damage is especially high around the touchdown point or TDP 18 of the riser 10, between the suspended portion of the riser 10 and the remainder of the riser 10 that lies on the seabed 12.

For these reasons, an S-configuration or wave-configuration riser may be preferred over a free-hanging catenary in some situations. In those configurations, a riser is given intermediate support by buoyancy or other means at one or more midwater locations between the surface and the seabed. Such intermediate support imparts an undulating shape to the ascending section of the riser, which helps to isolate the sag bend section from dynamic movement of the upper end of the riser as may be driven by wave or tide action.

Figures 1b to 1e exemplify S-configuration and wave-configuration risers. In each case, a portion of the riser 10 is lifted at an intermediate location between the seabed 12 and the surface 14 to adopt an upwardly-facing convex reversed curvature that defines a hogbend 20. The intermediate support applied to the hogbend 20 reduces the top tension and helps to decouple the TDP 18 of the riser 10 from motion of the vessel 16.

S-configurations or wave configurations are used preferentially for flexible risers such as cables, umbilicals or conduits made of flexible pipe. In this respect, whilst rigid risers have flexibility to bend along their length, they must not be confused with risers of flexible pipe as that term is understood in the art. Unbonded flexible pipe (often abbreviated simply as flexible pipe) is characterised by a layered composite structure that comprises polymer layers and steel carcass or armour layers.

Figures 1b and 1c show S-configuration risers 10, which are characterised by a subsea buoy or midwater arch 22 that may be anchored to the seabed 12 to support the hogbend 20. Specifically, Figure 1b shows a riser 10 with a steep-S configuration, in which the riser 10 is restrained at the TDP 18, whereas Figure 1c shows a riser 10 with a lazy-S configuration, in which the riser 10 is not restrained at the TDP 18.

Conversely, wave-configuration risers support the hogbend 20 with buoyancy attached to the riser 10. In this respect, a steep-wave riser 10 is shown in Figure 1d and a lazy-wave riser 10 is shown in Figure 1e. In these wave-configuration risers 10, buoyancy is added along a substantial length of the riser 10 to modify the curvature of the riser 10 and hence to define the shape, size and position of the hogbend 20. Conventionally, buoyancy is added to a riser 10 by attaching a series of buoyancy modules 24 that are spaced along the length of the hogbend 20 as shown in Figures 1d and 1e. Optionally, weight may be added to the riser 10 at either end of the hogbend 20 to achieve a desired waveform shape.

The invention is concerned with flexible riser arrangements in which a seabed anchor or foundation acting on the riser controls the touchdown point. Such anchoring to the seabed characterises the steep-S and steep-wave configurations exemplified in Figures 1b and 1d. The invention is also concerned with the challenges of forcing a flexible riser into a steep wave configuration. Steep wave or steep S are typically the best riser configurations for shallow water, as may be encountered especially when cabling renewable energy installations.

In conjunction with anchoring, a guide arrangement such as a downward-tapering, upwardly-flaring bellmouth may be required to keep a flexible riser at the desired touchdown point while protecting the riser from excessive bending or fatigue in the sag bend section.

In GB 2410756, a flexible steep-wave riser is installed by first lowering the riser toward the seabed while using a clump weight to keep the riser substantially vertical. Then, a bend is formed in the riser by anchoring a support to a foundation before finally generating the hogbend in the riser.

WO 2015/192899 discloses a riser installation technique that is standard apart from displacement of the surface installation.

In WO 2015/074687, the upper end of a flexible riser is displaced by winch arrangements.

EP 3350403 discloses a sheave-based riser support but does not teach how the riser configuration is installed.

WO 2011/147853 discloses using a guide tool carried by a submersible vehicle to guide an elongate element during laying, hence to control the path of the element when laid on the seabed. The guide tool has a sleeve through which the article moves axially during laying while the vehicle applies cross-axial guide forces to the article via the sleeve. The guide tool remains suspended in the water column above the seabed.

WO 2020/051664 discloses techniques for forming a hogbend in a lazy wave riser, hence without anchoring. Conversely, WO 2016/001386 discloses anchoring a steep-configuration riser to the seabed by engaging an attachment formation on the riser with a locating formation that is fixed relative to a seabed foundation. The attachment formation on the riser is pulled into engagement with the fixed locating formation by a winch wire. A generally conical funnel-like bellmouth flaring upwardly above the attachment formation serves as a bend restrictor.

US 8152411 describes a guide arrangement for marine risers. The guide arrangement includes at least one guide structure for a length of riser, a frame assembly for supporting the guide structure, anchor means at the seabed, tether means connecting the frame assembly to the anchor means, and a buoyancy element for keeping the guide structure at a desired level in the sea during operation.

US 2005/196243 describes a riser apparatus according to which an anchor is installed on the sea bed and a riser conduit is pivotally mounted on the anchor.

EP 2329106 relates to a system for determining the presence of liquids in the annulus of a flow line such as flexible riser in a subsea system.

EP 3164566 relates to a subsea flexible riser installation comprising a seabed foundation and a steep-configuration flexible riser anchored to the seabed by the foundation.

NO 20100203 describes a riser system in which a riser is connected to a subsea anchor via a tether clamp and a tether.

GB 2311503 describes a riser that is anchored to the seabed through a tether wire and a clump weight.

Against this background, the invention resides in a method of installing a steep-configuration subsea riser. The method comprises: supporting an elongate flexible riser element underwater with a portion of the riser element ascending from the seabed; capturing the ascending portion of the riser element in a guide formation of an anchoring support by downward movement of the anchoring support, and optionally by horizontal movement of the anchoring support; moving the anchoring support to a final position on the seabed while the riser element remains captured by the guide formation; and by using the anchoring support in the final position, anchoring the riser element in a steep configuration.

The anchoring support may be lowered to the riser element before it captures the riser element in the guide formation. After engaging the guide formation with the ascending portion of the riser element, the anchoring support may be lowered further to the final position. The anchoring support may be lowered in a ballasted state, for example by adding ballast to a tank of the anchoring support or by coupling one or more clump weights or ballast chains to the anchoring support.

The anchoring support may also, or instead, be moved to the final position by horizontal displacement after engaging the guide formation with the ascending portion of the riser element. For example, the anchoring support could be pulled toward a subsea sheave or winch, or toward a subsea sheave on a wire that extends to an above-surface winch.

The anchoring support may be held in the final position by its self-weight or negative buoyancy and/or by engagement with a subsea structure or foundation.

The riser element may be captured in a downwardly-opening channel profile of the guide formation. The channel profile may be at least partially closed after capturing the riser element. For example, elegantly, a bellmouth may be formed around the riser element by combining an additional guide component with the guide formation.

In an example of the invention, the riser element is first installed in a lazy-wave or lazy-S configuration. Then, by capturing the ascending portion of the riser element and moving the anchoring support to the final position, the riser element can be reconfigured into a steep-wave or steep-S configuration. In that case, a hogbend section of the riser element may be formed before capturing the ascending portion of the riser element. In other examples, the ascending portion of the riser element could be captured before forming a hogbend section of the riser element. In that case, the hogbend section could be formed after moving the anchoring support to the final position. In each case, if the hogbend is supported by a buoy, the riser element may be locked or latched against longitudinal movement relative to the buoy.

After capturing the riser element, relative longitudinal movement between the riser element and the guide formation may be permitted or may be blocked, for example after some limited degree of permitted relative movement. Relative longitudinal movement between the riser element and the guide formation may, for example, be blocked by engaging the guide formation with a stop formation that is in fixed relation to the riser element. The stop formation could then be locked or latched to the anchoring support. Separately, holdback force may be applied to a portion of the riser element that extends across the seabed, that force being additional to friction between the element and the seabed.

Correspondingly, the inventive concept also embraces a steep-configuration subsea riser system that comprises: an elongate flexible riser element shaped to define a hogbend portion adjoining an ascending portion that ascends from a seabed touchdown point; and an anchoring support positioned on the seabed adjacent to the touchdown point and engaged with the riser element to anchor the riser element in a steep configuration; wherein the anchoring support comprises a guide formation that is arranged to capture the riser element by movement of the anchoring support in a direction transverse to the riser element.

The guide formation may comprise a downwardly-opening channel profile. An additional guide component may be combined with the guide formation to form a bellmouth around the riser element.

The riser element may be slidable along the guide formation. Nevertheless, the riser element may comprise a stop formation that is cooperable with, or lockable to, the anchoring support to block relative longitudinal movement between the riser element and the anchoring support. Similarly, a different or additional stop formation of the riser element may be cooperable with a buoy that supports the hogbend portion to block relative longitudinal movement between the riser element and the buoy. Also, a holdback provision may act on a portion of the riser element extending across the seabed.

To simplify cable installation, the invention contemplates various methods for installing a flexible elongate element with a steep configuration. In one such method, a flexible element such as a cable is installed with buoyancy to define a hogbend, for example as part of a wave configuration that is characterised by buoyancy attached to and distributed along a section of the element. Then, a chute-like guide formation on an anchor suspended from a surface vessel is guided onto and engaged with the element at a location above the seabed. The element is thereby captured by the guide formation that embraces the element, for example in the manner of a saddle.

The anchor is then moved toward a final position, for example by pulling the anchor with a wire, and then landed on the seabed at the final position. During that movement of the anchor, the guide formation engaged with the element forces the element into the steep configuration.

In another method of the invention, a tethered or untethered midwater anchor or arch is flooded or otherwise ballasted and pre-installed on the seabed together with a vertical anchor and a guide formation. The cable or other flexible element may be installed with a clamp or other formation that slots into or otherwise engages the midwater anchor or arch. The midwater anchor or arch is then de-ballasted to elevate the hogbend, thus achieving the final configuration of the cable which may be a steep S-configuration.

In both approaches, one or more additional components may be assembled with the guide formation, or the guide formation may be otherwise at least partially closed or narrowed, to form a flared bellmouth that controls and limits bending of the cable.

Holdback of the element can be achieved in various ways, for example with a clamp that slots into the bottom end of the guide formation or bellmouth or by using a holdback anchor or other means of holdback, such as rock dumping over the static section of the element on the seabed.

Embodiments of the invention implement a method for anchoring a flexible steep wave riser, the method comprising: installing the riser in a lazy configuration; coupling an anchoring support to the riser; and moving the anchoring support to a final position on the seabed until the riser is in a steep configuration.

The anchoring support may move along vertical and/or horizontal axes between engaging the riser and reaching its final position. The anchoring support can slide on the riser and/or be fixed to the riser, for example after initially sliding along the riser.

The anchoring support may be pulled down to its final position by ballasting, for example by ballasting a tank part of the anchoring support that may form a base of the anchoring support. Ballasting could instead or additionally be achieved by coupling one or more clump weights or ballast chains to the anchoring support. The anchoring support may be held at its final position by its self-weight or negative buoyancy, or may be engaged there with a subsea foundation.

The anchoring support may be pulled substantially horizontally toward a subsea foundation by a pulling cable or wire. The wire may extend from a winch on that foundation or from a sheave on that foundation, the winch then being elsewhere such as on an installation vessel or a surface facility.

The step of coupling the anchoring support to the riser may be performed first, for example before elevating the hogbend portion of the riser to a midwater position. The step of installing the riser in a lazy configuration may comprise supporting the riser on a midwater arch. That step may involve connecting the arch to the riser in such a way as to restrain or prevent longitudinal movement of the riser relative to the arch.

In summary, a steep-configuration subsea riser can be installed in accordance with the invention by supporting an elongate flexible riser element underwater with a portion of the riser element ascending from the seabed. The ascending portion of the riser element is captured in a guide formation of an anchoring support. The anchoring support is then moved to a final position on the seabed while the riser element remains captured by the guide formation. When in the final position, the anchoring support anchors the riser element in a steep configuration.

The anchoring support may be lowered to the riser element to capture the riser element and may be further lowered to the final position after capturing the riser element. In this way, after installing the riser element in a lazy configuration, capturing the ascending portion of the riser element and moving the anchoring support to the final position, the riser element is reconfigured into a steep configuration.

To put the invention into context, reference has already been made to Figures 1a to 1e of the accompanying drawings, which are simplified schematic side views that exemplify various known riser configurations. In order that the invention may be more readily understood, reference will now be made, by way of example, to the remaining drawings in which:
Figure 2 is a schematic side view in partial longitudinal section of an anchoring support of the invention including an upper guide formation;
Figure 3 corresponds to Figure 2 but shows a lower guide formation added to the upper guide formation to form a bellmouth for guiding and limiting curvature of a cable;
Figures 4a and 4b are schematic side views showing steps of an installation method of the invention performed on a lazy-wave riser to form a steep-wave riser;
Figures 5a and 5b are schematic side views showing steps of another installation method of the invention performed on a lazy-wave riser to form a steep-wave riser;
Figures 6a and 6b are schematic side views showing steps of another installation method of the invention performed on an S-configuration riser to form a steep-S riser; and
Figures 7a to 7c are schematic side views showing steps of another installation method of the invention when forming a steep-S riser.

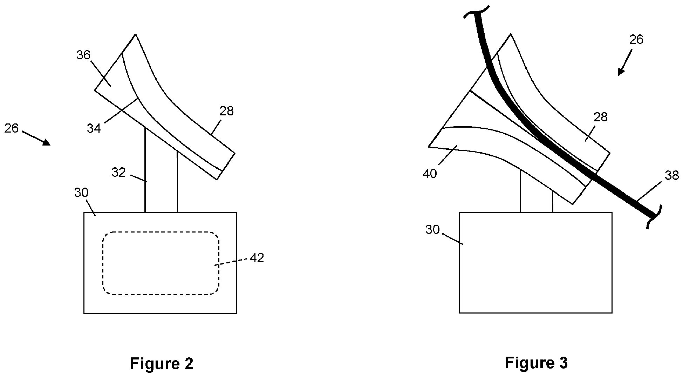

Referring next, then, to Figures 2 and 3 of the drawings, an anchoring support 26 of the invention comprises an upper guide 28, a base 30 and a support structure 32 that supports the upper guide 28 at a position above and offset laterally from the base 30.

The upper guide 28 is generally in the shape of a funnel that is divided or halved along a central longitudinal plane, that plane being inclined to the vertical. The internal surface 34 of the funnel flares upwardly and tapers downwardly and is curved along its length when viewed in longitudinal section. By virtue of that curvature, the upper portion of the internal surface 34 is more steeply inclined than the lower portion of the internal surface 34.

The upper guide 28 is upwardly convex and downwardly concave, defining a downwardly-opening longitudinally-extending channel section 36 in its underside. The contour of the underside is akin to a hyperbolic paraboloid or saddle shape that can embrace a cable or other elongate subsea riser element 38 extending longitudinally along the channel section 36. In this way, as the anchoring support 26 is lowered onto or moved horizontally against the inclined element 38 of the riser 10 underwater, the upper guide 28 can engage the element 38 from above and/or the side, capturing the element 38 between the sides of the channel section 36.

Once the element 38 is captured in the channel section 36, the upper guide 28 can slide along the element 38 as the anchoring support 26 is moved further through the water relative to the element 38. It is also possible for the upper guide 28 to be fixed to the element 38, either immediately or after some relative sliding movement between them. In either case, continued movement of the anchoring support 26 changes the shape, position and contour of the element 38, transforming a riser 10 of lazy configuration or other configuration toward a steep configuration.

When the anchoring support 26 is then landed on the seabed 12 or on a subsea foundation, the anchoring support 26 anchors the touchdown region of the riser 10 to put the riser 10 into the required steep configuration. Then, if desired, the upper guide 28 can be closed around the element 38 to form a bellmouth that limits and controls curvature of the element 38 during the service life of the riser 10.

The upper guide 28 can be closed by moving a closure attached to the upper guide 28 or by attaching such a closure to the upper guide 28. In this example, as shown in Figure 3, a closure in the form of a lower guide 40 is added to the upper guide 28 to complete the circumference of the funnel shape around the element 38. The lower guide 40 mirrors the internal shape of the upper guide 28 about the inclined plane of their mutual interface.

The base 30 of the anchoring support 26 is configured to rest on the seabed 12 or on a subsea foundation. For that purpose, the base 30 can be ballasted with an internal ballasting tank 42 that may afford variable buoyancy to the anchoring support 26, by self-weight and/or by externally-attachable ballast such as clump weights or chains. The base 30 may also, or instead, comprise formations for attachment to a subsea foundation, or may have foundation structures such as mudmats to rest on a soft seabed 12 without sinking or overturning.

The remaining drawings show various ways in which an anchoring support 26 like that of Figure 2 can be used to install steep-configuration flexible risers 10 in accordance with the invention. In each of those drawings, a surface facility 16 such as a platform or FPSO is shown floating at the surface 14 and a riser element 38 such as a cable is shown extending from the seabed 12 to the surface facility 16. In most of those drawings, an installation vessel 44 is also shown at the surface 14 suspending the anchoring support 26 from a crane of the vessel 44. The anchoring support 26 could instead be suspended from a winch of the vessel 44.

Aided by ballasting or variable buoyancy, the installation vessel 44 lowers the anchoring support 26 into the water and determines the height or Z-axis position of the anchoring support 26 above the seabed 12. The vessel 44 also determines the horizontal position or X-Y axis position of the anchoring support 26.

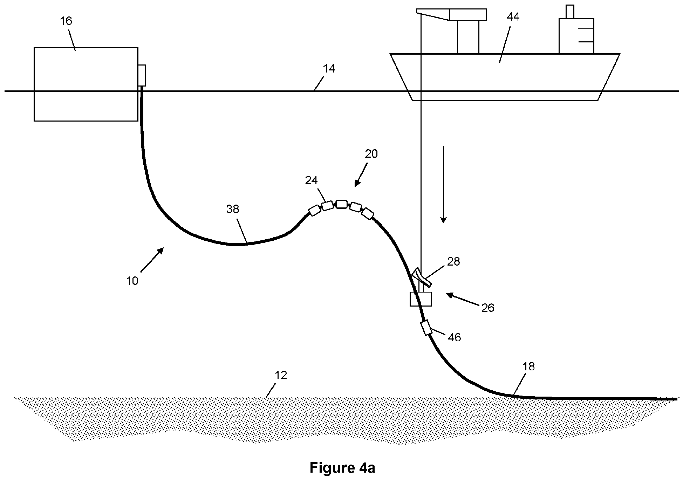

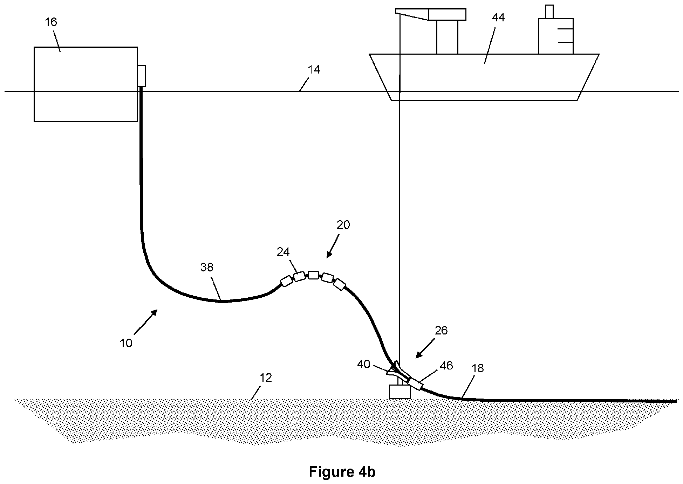

Referring now specifically to Figures 4a and 4b, the riser 10 is shown here supported by a series of buoyancy modules 24 that form a hogbend 20 in the wave-shaped riser between the surface 14 and the seabed 12. Initially, as shown in Figure 4a, the riser 10 has a lazy-wave shape without anchoring around the touchdown point or TDP 18 where the riser element 38 converges with and contacts the seabed 12. The anchoring support 26 lowered from the installation vessel 44 is shown here capturing the riser element 38 in the ascending section above the seabed 12 between the TDP 18 and the hogbend 20. As explained above, the riser 10 is captured in and extends along the downwardly- and laterally-opening channel section 36 of the upper guide 28.

Further lowering of the anchoring support 26 reshapes the riser 10, forcing the riser 10 toward a steep-wave shape, until the anchoring support 26 lands on the seabed 12 in its final position and is held there by its self-weight. Optionally, as also shown in Figure 4b, the lower guide 40 can then be added, for example, by an ROV, to complete a bellmouth around the riser 10.

This completes the formation and installation of the steep-wave riser 10 as shown in Figure 4b, whereupon the installation vessel 44 can detach from the anchoring support 26 and depart. The anchoring support 26 then remains on the seabed 12 to anchor and to support the riser 10 throughout its operational life.

The upper guide 28 can slide along the riser element 38 as the anchoring support 26 is lowered further and/or moves horizontally toward its final position. In this example, relative movement between the upper guide 28 and the riser element 38 ceases when the upper guide 28 encounters and locks against or latches to a clamp or other stop formation 46 on the riser element 38. The anchoring support 26 can thereby apply axial force to the riser element 38 to shape the riser 10 and to maintain holdback force in operation of the riser 10.

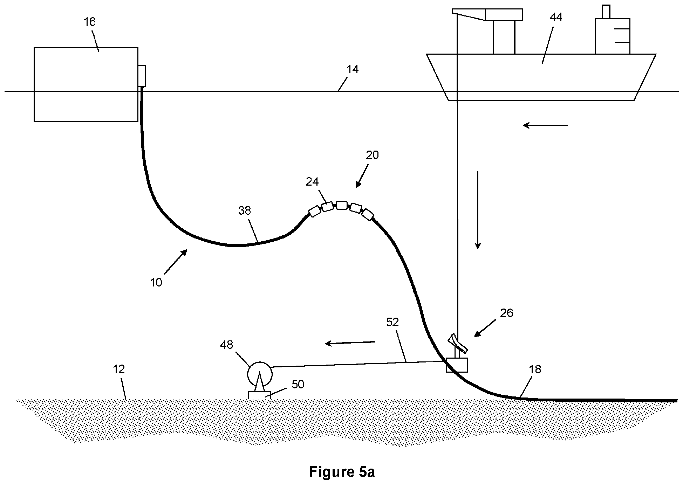

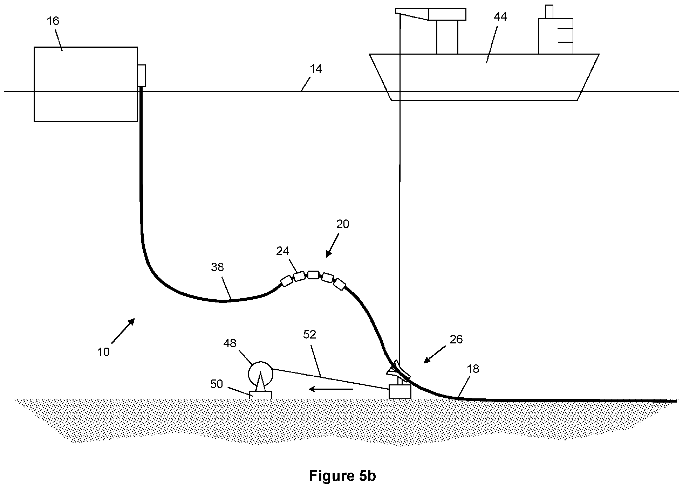

Figures 5a and 5b largely correspond to Figures 4a and 4b but show a winch 48 on a subsea foundation 50 that pulls the anchoring support 26 horizontally toward its final position. For that purpose, the winch 48 is coupled to the anchoring support 26 by a wire 52. In variants of this arrangement, the wire 52 could extend around a sheave placed on the foundation 50 and the winch 48 could be located elsewhere, for example on the surface facility 16 or on the installation vessel 44. Again, the upper guide 28 can slide along the riser element 38as the anchoring support 26 moves toward its final position and/or relative movement between the upper guide 28 and the riser element 38 can be blocked, for example with a stop formation 46 on the riser element 38 as in the preceding embodiment.

Figure 5a shows the winch 48 pulling the anchoring support 26 horizontally so that the upper guide 28 can embrace the riser element 38 at a mid-water location between the hogbend 20 and the TDP 18. Figure 5b shows the winch pulling the anchoring support 26 across the seabed 12 into its final position.

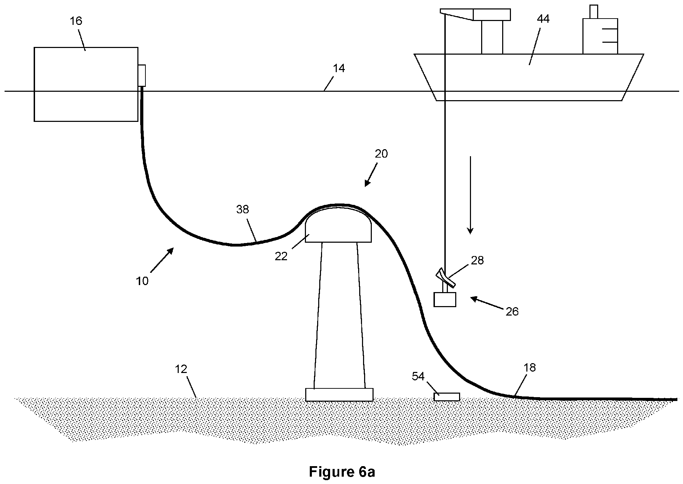

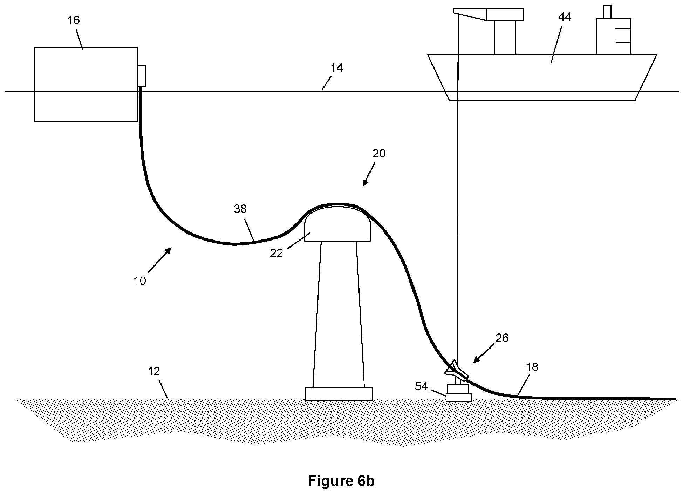

Figures 6a and 6b largely correspond to Figures 4a and 4b but show the riser 10 in an S-configuration in which the hogbend 20 is supported by a tethered buoy such as a midwater arch 22. In this example, the anchoring support 26 is lowered onto the riser between the hogbend 20 and the TDP 18 to capture the riser element 38 in the upper guide 28 and is then lowered further onto the seabed 12 to constrain the riser 10 into a steep-S configuration. More specifically, in this example, the anchoring support 26 is lowered onto and attached to a subsea foundation 54 pre-installed on the seabed 12.

Such a foundation 54 could also be used for the anchoring support 26 in other embodiments.

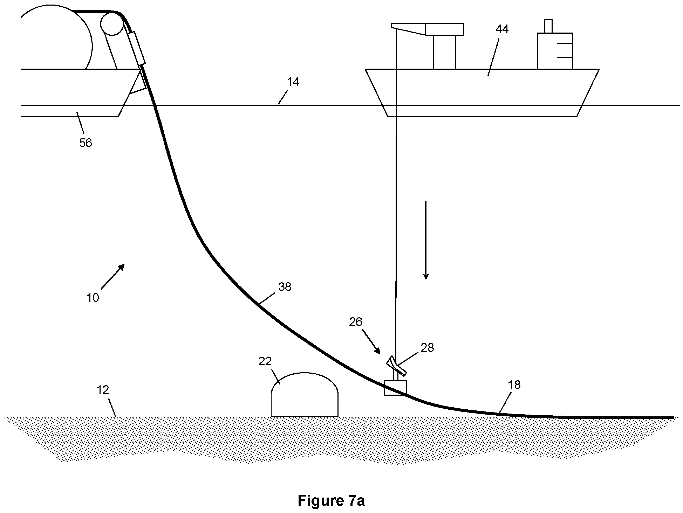

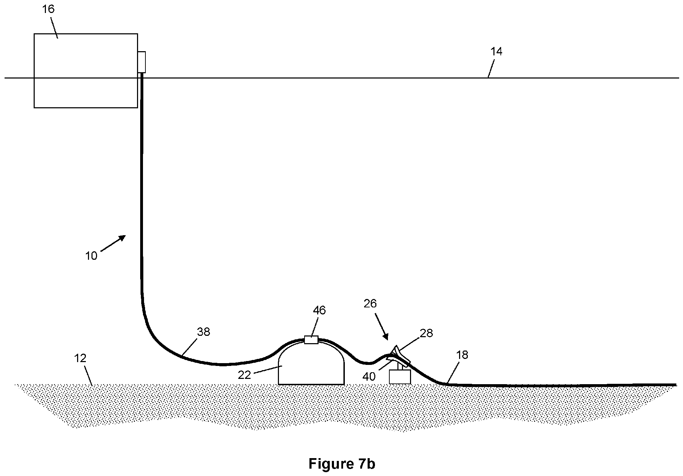

Finally, Figures 7a to 7c show another way of forming a riser 10 with a steep-S configuration. In this variant, an untethered buoy such as a midwater arch 22 is initially ballasted to lie on the seabed 12 as shown in Figures 7a and 7b. As the riser element 38 is laid across the arch 22 from a laying vessel 56 as shown in Figure 7a, an anchoring support 26 is lowered onto the riser element 38 above the TDP 18 to capture the riser element 38 in the upper guide 28. The lower guide 40 may be added to complete a bellmouth around the riser element 38 after the anchoring support 26 lands on the seabed 12 as shown in Figure 7b.

In Figure 7b, the upper end of the riser 10 has now been transferred to a surface facility 16. Also, a stop formation 46 on the riser element 38 has been engaged with the arch 22 to prevent longitudinal movement of the riser element 38 relative to the arch 22.

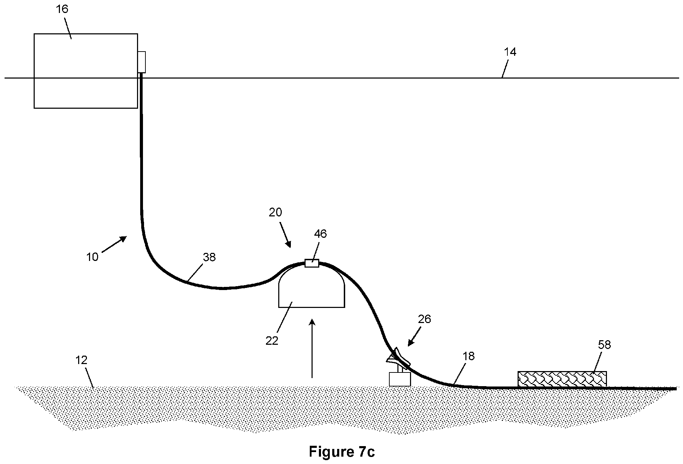

In Figure 7c, the arch 22 has been deballasted to elevate the hogbend 20 section of the riser 10 above the seabed 12 while the anchoring support 26 continues to restrain the region of the riser 10 around the TDP 18, hence forming a steep-S configuration.

Figure 7c also shows a holdback provision 58 for applying holdback force to the riser element 38. This holdback provision 58 could be an anchor, a subsea structure or a berm of rock deposited onto the horizontal section of the riser 10 extending along the seabed 12. Similar provisions could be made in any of the preceding embodiments.

Many other variations are possible within the inventive concept. For example, the position of the anchoring support in the water column - especially its horizontal or X-Y axis position - could be controlled more finely by an attendant ROV or UUV, or indeed by a self-propulsion facility of the anchoring support itself.

Nevertheless, the scope of the invention is solely defined by the appended claims that follow.

## Claims

1. A method of installing a steep-configuration subsea riser (10), the method comprising:
supporting an elongate flexible riser element (38) underwater with a portion of the riser element (38) ascending from the seabed (12);
capturing the ascending portion of the riser element (38) in a guide formation (28) of an anchoring support (26) by downward movement of the anchoring support (26);
moving the anchoring support (26) to a final position on the seabed (18) while the riser element (38) remains captured by the guide formation (28); and
by using the anchoring support (26) in the final position, anchoring the riser element (38) in a steep configuration.

2. The method of Claim 1, comprising lowering the anchoring support (26) to the final position after engaging the guide formation (28) with the ascending portion of the riser element (38).

3. The method of Claim 1 or Claim 2, comprising lowering the anchoring support (26) to the riser element (38) before capturing the riser element (38) in the guide formation (28).

4. The method of Claim 2 or Claim 3, comprising lowering the anchoring support (26) in a ballasted state.

5. The method of any preceding claim, comprising moving the anchoring support (26) to the final position by horizontal displacement after engaging the guide formation (28) with the ascending portion of the riser element (38).

6. The method of any preceding claim, comprising capturing the riser element (38) in a downwardly-opening channel profile (36) of the guide formation (28).

7. The method of Claim 6, comprising at least partially closing the channel profile (36) after capturing the riser element (38).

8. The method of Claim 6 or Claim 7, comprising forming a bellmouth around the riser element (38) by combining an additional guide component (40) with the guide formation (28).

9. The method of any preceding claim, comprising:
installing the riser element (38) in a lazy configuration; and
by capturing the ascending portion of the riser element (38) and moving the anchoring support (26) to the final position, reconfiguring the riser element (38) into the steep configuration.

10. The method of Claim 9, comprising forming a hogbend section (20) of the riser element (38) before capturing the ascending portion of the riser element (38).

11. The method of any of Claims 1 to 8, comprising capturing the ascending portion of the riser element (38) and subsequently forming a hogbend section (20) of the riser element (38).

12. The method of Claim 10 or Claim 11, comprising forming the hogbend (20) supported by a buoy (24) and blocking relative longitudinal movement between the riser element (38) and the buoy (24).

13. The method of any preceding claim, comprising permitting relative longitudinal movement between the riser element (38) and the guide formation (28) after capturing the riser element (38).

14. The method of any preceding claim, comprising blocking relative longitudinal movement between the riser element (38) and the guide formation (28) after capturing the riser element (38).

15. The method of Claim 14, comprising engaging the guide formation (28) with a stop formation (46) that is in fixed relation to the riser element (38).

16. A steep-configuration subsea riser system, comprising:
an elongate flexible riser element (38) shaped to define a hogbend portion (20) adjoining an ascending portion that ascends from a seabed touch-down point (18); and
an anchoring support (26) positioned on the seabed (12) adjacent the touchdown point (18) and engaged with the riser element (38) to anchor the riser element (38) in a steep configuration;
wherein the anchoring support (26) comprises a guide formation (28) that is arranged to capture the riser element (38) by movement of the anchoring support (26) in a direction transverse to the riser element (38).

17. The riser of Claim 16, wherein the guide formation (28) comprises a downwardly-opening channel profile (36).

18. The riser of Claim 16 or Claim 17, further comprising an additional guide component (40) combined with the guide formation (28) to form a bellmouth around the riser element (38).

19. The riser of any of Claims 16 to 18, wherein the anchoring support (26) comprises a ballast tank or supports one or more clump weights or ballast chains.

20. The riser of any of Claims 16 to 19, wherein the riser element (38) is slidable along the guide formation (28).

21. The riser of any of Claims 16 to 20, wherein the riser element (38) comprises a stop formation (46) that is cooperable with the anchoring support (26) to block relative longitudinal movement between the riser element (38) and the anchoring support (26).

22. The riser of any of Claims 16 to 21, wherein the riser element (38) comprises a stop formation (46) that is cooperable with a buoy (24) supporting the hogbend portion (20) to block relative longitudinal movement between the riser element (38) and the buoy (24).

## Patentansprüche

1. Verfahren zum Installieren einer Untersee-Steigleitung (10) in "Steep"-Konfiguration, wobei das Verfahren Folgendes umfasst:
Halten eines langgestreckten flexiblen Steigleitungselements (38) unter Wasser, sodass ein Abschnitt des Steigleitungselements (38) vom Meeresboden (12) aufsteigt;
Fangen des aufsteigenden Abschnitts des Steigleitungselements (38) in einem Führungsgebilde (28) einer Verankerung (26) durch Abwärtsbewegung der Verankerung (26);
Bewegen der Verankerung (26) an eine endgültige Position auf dem Meeresboden (18), während das Steigleitungselement (38) von dem Führungsgebilde (28) gefangen bleibt; und
durch Verwenden der Verankerung (26) in der endgültigen Position, Verankern des Steigleitungselements (38) in einer "Steep"-Konfiguration.

2. Verfahren nach Anspruch 1, umfassend das Absenken der Verankerung (26) in die endgültige Position nachdem das Führungsgebilde (28) mit dem aufsteigenden Abschnitt des Steigleitungselements (38) in Eingriff gebracht wurde.

3. Verfahren nach Anspruch 1 oder Anspruch 2, umfassend das Absenken der Verankerung (26) auf das Steigleitungselement (38) vor dem Fangen des Steigleitungselements (38) in dem Führungsgebilde (28).

4. Verfahren nach Anspruch 2 oder Anspruch 3, umfassend das Absenken der Verankerung (26) in einem beschwerten Zustand.

5. Verfahren nach einem der vorangehenden Ansprüche, umfassend das Bewegen der Verankerung (26) in die endgültige Position durch horizontale Verschiebung, nachdem das Führungsgebilde (28) mit dem aufsteigenden Abschnitt des Steigleitungselements (38) in Eingriff gebracht wurde.

6. Verfahren nach einem der vorangehenden Ansprüche, umfassend das Fangen des Steigleitungselements (38) in einem nach unten geöffneten U-Profil (36) des Führungsgebildes (28).

7. Verfahren nach Anspruch 6, umfassend das mindestens teilweise Schließen des U-Profils (36) nach dem Fangen des Steigleitungselements (38).

8. Verfahren nach Anspruch 6 oder Anspruch 7, umfassend das Bilden einer Aufweitung um das Steigleitungselement (38) durch Kombinieren einer zusätzlichen Führungskomponente (40) mit dem Führungsgebilde (28).

9. Verfahren nach einem der vorangehenden Ansprüche, umfassend:
Installieren des Steigleitungselements (38) in einer "Lazy"-Konfiguration; und
durch Fangen des aufsteigenden Abschnitts des Steigleitungselements (38) und Bewegen der Verankerung (26) in die endgültige Position, Umkonfigurieren des Steigleitungselements (38) in die "Steep"-Konfiguration.

10. Verfahren nach Anspruch 9, umfassend das Bilden eines nach oben gewölbten Teilabschnitts (20) des Steigleitungselements (38) vor dem Fangen des aufsteigenden Abschnitts des Steigleitungselements (38).

11. Verfahren nach einem der Ansprüche 1 bis 8, umfassend das Fangen des aufsteigenden Abschnitts des Steigleitungselements (38) und anschließend Bilden eines nach oben gewölbten Teilabschnitts (20) des Steigleitungselements (38).

12. Verfahren nach Anspruch 10 oder Anspruch 11, umfassend das durch eine Boje (24) unterstützte Bilden der Wölbung nach oben (20) und Blockieren relativer Längsbewegung zwischen dem Steigleitungselement (38) und der Boje (24).

13. Verfahren nach einem der vorangehenden Ansprüche, umfassend das Zulassen relativer Längsbewegung zwischen dem Steigleitungselement (38) und dem Führungsgebilde (28) nach dem Fangen des Steigleitungselements (38).

14. Verfahren nach einem der vorangehenden Ansprüche, umfassend das Blockieren relativer Längsbewegung zwischen dem Steigleitungselement (38) und dem Führungsgebilde (28) nach dem Fangen des Steigleitungselements (38).

15. Verfahren nach Anspruch 14, umfassend das Ineingriffbringen des Führungsgebildes (28) mit einem Anschlaggebilde (46), das sich in feststehender Beziehung zu dem Steigleitungselement (38) befindet.

16. Untersee-Steigleitungssystem in "Steep"-Konfiguration, umfassend:
ein langgestrecktes flexibles Steigleitungselement (38), das geformt ist, um einen nach oben gewölbten Abschnitt (20) zu definieren, der an einen aufsteigenden Abschnitt angrenzt, der von einer Aufsetzstelle (18) auf dem Meeresboden aufsteigt; und
eine Verankerung (26), die der Aufsetzstelle (18) benachbart auf dem Meeresboden (12) positioniert ist und sich mit dem Steigleitungselement (38) im Eingriff befindet, um das Steigleitungselement (38) in einer "Steep"-Konfiguration zu verankern;
wobei die Verankerung (26) ein Führungsgebilde (28) umfasst, das dazu angeordnet ist, das Steigleitungselement (38) durch Bewegung der Verankerung (26) in einer Richtung quer zu dem Steigleitungselement (38) zu fangen.

17. Steigleitung nach Anspruch 16, wobei das Führungsgebilde (28) ein nach unten geöffnetes U-Profil (36) umfasst.

18. Steigleitung nach Anspruch 16 oder Anspruch 17, ferner umfassend eine zusätzliche Führungskomponente (40), die mit dem Führungsgebilde (28) kombiniert ist, um eine Aufweitung um das Steigleitungselement (38) zu bilden.

19. Steigleitung nach einem der Ansprüche 16 bis 18, wobei die Verankerung (26) einen Ballasttank umfasst oder eine(n) oder mehrere Gewichtsklötze oder Ballastketten umfasst.

20. Steigleitung nach einem der Ansprüche 16 bis 19, wobei das Steigleitungselement (38) entlang des Führungsgebildes (28) gleiten kann.

21. Steigleitung nach einem der Ansprüche 16 bis 20, wobei das Steigleitungselement (38) ein Anschlaggebilde (46) umfasst, das mit der Verankerung (26) zusammenwirken kann, um relative Längsbewegung zwischen dem Steigleitungselement (38) und der Verankerung (26) zu blockieren.

22. Steigleitung nach einem der Ansprüche 16 bis 21, wobei das Steigleitungselement (38) ein Anschlaggebilde (46) umfasst, das mit einer den nach oben gewölbten Abschnitt (20) tragenden Boje (24) zusammenwirken kann, um relative Längsbewegung zwischen dem Steigleitungselement (38) und der Boje (24) zu blockieren.

## Revendications

1. Procédé d'installation d'une colonne montante sous-marine en configuration tendue (10), le procédé comprenant :
soutenir un élément formant colonne montante allongé flexible (38) sous l'eau de sorte qu'une partie de l'élément formant colonne montante (38) monte depuis le fond marin (12) ;
attraper la partie montante de l'élément formant colonne montante (38) dans une structure de guidage (28) d'un support d'ancrage (26) par un déplacement vers le bas du support d'ancrage (26) ;
déplacer le support d'ancrage (26) jusqu'à une position finale sur le fond marin (18) tandis que l'élément formant colonne montante (38) reste attrapé dans la structure de guidage (28) ; et
au moyen du support d'ancrage (26) dans la position finale, ancrer l'élément formant colonne montante (38) dans une configuration tendue.

2. Procédé selon la revendication 1, comprenant le fait d'abaisser le support d'ancrage (26) jusqu'à la position finale après avoir mis la structure de guidage (28) en prise avec la partie montante de l'élément formant colonne montante (38).

3. Procédé selon la revendication 1 ou la revendication 2, comprenant le fait d'abaisser le support d'ancrage (26) jusqu'à l'élément formant colonne montante (38) avant d'attraper l'élément formant colonne montante (38) dans la structure de guidage (28).

4. Procédé selon la revendication 2 ou la revendication 3, comprenant le fait d'abaisser le support d'ancrage (26) dans un état lesté.

5. Procédé selon l'une quelconque des revendications précédentes, comprenant le fait de déplacer le support d'ancrage (26) jusqu'à la position finale par un déplacement horizontal après avoir mis la structure de guidage (28) en prise avec la partie montante de l'élément formant colonne montante (38).

6. Procédé selon l'une quelconque des revendications précédentes, comprenant le fait d'attraper l'élément formant colonne montante (38) dans une partie profilée formant canal ouverte vers le bas (36) de la structure de guidage (28).

7. Procédé selon la revendication 6, comprenant le fait de fermer au moins partiellement la partie profilée formant canal (36) après avoir attrapé l'élément formant colonne montante (38).

8. Procédé selon la revendication 6 ou la revendication 7, comprenant le fait de former un orifice évasé autour de l'élément formant colonne montante (38) en combinant un composant de guidage supplémentaire (40) avec la structure de guidage (28).

9. Procédé selon l'une quelconque des revendications précédentes, comprenant :
installer l'élément formant colonne montante (38) dans une configuration lâche ; et
en attrapant la partie montante de l'élément formant colonne montante (38) et en déplaçant le support d'ancrage (26) jusqu'à la position finale, reconfigurer l'élément formant colonne montante (38) de façon à le mettre dans la configuration tendue.

10. Procédé selon la revendication 9, comprenant le fait de former une section à courbure positive (20) de l'élément formant colonne montante (38) avant d'attraper la partie montante de l'élément formant colonne montante (38).

11. Procédé selon l'une quelconque des revendications 1 à 8, comprenant le fait d'attraper la partie montante de l'élément formant colonne montante (38), puis le fait de former une section à courbure positive (20) de l'élément formant colonne montante (38).

12. Procédé selon la revendication 10 ou la revendication 11, comprenant le fait de former la courbure positive (20) soutenue par une bouée (24) et le fait de bloquer un mouvement longitudinal relatif entre l'élément formant colonne montante (38) et la bouée (24).

13. Procédé selon l'une quelconque des revendications précédentes, comprenant le fait de permettre un mouvement longitudinal relatif entre l'élément formant colonne montante (38) et la structure de guidage (28) après avoir attrapé l'élément formant colonne montante (38).

14. Procédé selon l'une quelconque des revendications précédentes, comprenant le fait de bloquer un mouvement longitudinal relatif entre l'élément formant colonne montante (38) et la structure de guidage (28) après avoir attrapé l'élément formant colonne montante (38).

15. Procédé selon la revendication 14, comprenant le fait de mettre la structure de guidage (28) en prise avec une structure d'arrêt (46) qui est fixe relativement à l'élément formant colonne montante (38).

16. Système de colonne montante sous-marine à configuration tendue, comprenant :
un élément formant colonne montante allongé flexible (38) mis en forme de façon à définir une partie à courbure positive (20) adjacente à une partie montante qui monte depuis un point de contact (18) avec le fond marin ; et
un support d'ancrage (26) placé sur le fond marin (12) à proximité du point de contact (18) et mis en prise avec l'élément formant colonne montante (38) pour ancrer l'élément formant colonne montante (38) dans une configuration tendue ;
dans lequel le support d'ancrage (26) comprend une structure de guidage (28) qui est conçue pour attraper l'élément formant colonne montante (38) par un déplacement du support d'ancrage (26) dans une direction transversale à l'élément formant colonne montante (38).

17. Colonne montante selon la revendication 16, dans laquelle la structure de guidage (28) comprend une partie profilée formant canal ouverte vers le bas (36).

18. Colonne montante selon la revendication 16 ou la revendication 17, comprenant, en outre, un composant de guidage supplémentaire (40) combiné avec la structure de guidage (28) de façon à former un orifice évasé autour de l'élément formant colonne montante (38).

19. Colonne montante selon l'une quelconque des revendications 16 à 18, dans laquelle le support d'ancrage (26) comprend un réservoir de ballast ou soutient un ou plusieurs poids de lestage ou une ou plusieurs chaînes de lestage.

20. Colonne montante selon l'une quelconque des revendications 16 à 19, dans laquelle l'élément formant colonne montante (38) peut coulisser le long de la structure de guidage (28).

21. Colonne montante selon l'une quelconque des revendications 16 à 20, dans laquelle l'élément formant colonne montante (38) comprend une structure d'arrêt (46) pouvant coopérer avec le support d'ancrage (26) pour bloquer un mouvement longitudinal relatif entre l'élément formant colonne montante (38) et le support d'ancrage (26).

22. Colonne montante selon l'une quelconque des revendications 16 à 21, dans laquelle l'élément formant colonne montante (38) comprend une structure d'arrêt (46) pouvant coopérer avec une bouée (24) soutenant la partie à courbure positive (20) pour bloquer un mouvement longitudinal relatif entre l'élément formant colonne montante (38) et la bouée (24).
